# EUROPEAN PATENT SPECIFICATION

(11) **EP 3 274 296 B1**
(45) Date of publication and mention of the grant of the patent: **19.02.2020**
(21) Application number: 16769335.7
(22) Date of filing: 15.03.2016
(51) Int. Cl.: C01B 33/06, C01G 3/00, B01J 8/18, C01B 33/107

(54) **METHOD FOR FLUIDIZING COPPER SILICIDE AND PROCESS FOR PREPARING A HALOSILANE USING THE METHOD**
VERFAHREN ZUR VERFLÜSSIGUNG VON KUPFERSILIZID UND VERFAHREN ZUR HERSTELLUNG EINES HALOSILANS UNTER VERWENDUNG DES VERFAHRENS
PROCÉDÉ DE FLUIDIFICATION DE SILICIURE DE CUIVRE ET PROCÉDÉ DE PRÉPARATION D'UN HALOGÉNOSILANE À L'AIDE DU PROCÉDÉ

(30) Priority: 24.03.2015 US 201562137330 P
(43) Date of publication of application: 31.01.2018
(73) Proprietor: Dow Silicones Corporation, Midland, MI 48686-0994 (US)
(72) Inventor: BERGLUND, Mark, Midland, MI 48674 (US); COPPERNOLL, Aaron, Crestwood, KY 40014 (US); HARDER, Patrick, James, Saginaw, MI 48609 (US); KATSOULIS, Dimitris, Midland, MI 48642 (US); PUSHKAREV, Vladimir, Midland, MI 48642 (US)
(74) Representative: Murgitroyd & Company
(86) International application number: PCT/US2016/022407
(87) International publication number: WO 2016/153843

(56) References cited:
- WO-A1-2014/137096
- WO-A1-2014/149224
- WO-A1-2014/149224
- US-A- 4 554 370
- US-A- 4 569 693
- US-A1- 2001 049 423
- US-A1- 2005 074 392
- US-A1- 2015 030 520

## Description

Various halosilanes find use in different industries. Diorganodihalosilanes, such as dimethyldichlorosilane, are useful as raw materials to produce a wide range of polyorganosiloxanes, such as polydiorganosiloxanes. Hydridohalosilanes, such as trichlorosilane (HSiCl₃) are useful as raw materials for producing polycrystalline silicon. Commercial scale production of halosilanes is advantageously performed in a fluidized bed reactor.

A fluidized bed apparatus comprises a fluidized bed comprising solid particles and a fluidization gas or vapor. The fluidized bed is a fluid-solid heterogeneous mixture that exhibits fluid-like properties. In fluidized beds, the contact of the solid particles with the fluidization gas or vapor is greatly enhanced as compared to contact of the solids with gas or vapor in fixed beds or packed beds. Fluidized beds are used in processes in which high levels of contacts between vapors and/or gases and solids are desired, such as processes for producing halosilanes. Particles in fluidized beds can be classified in four Geldart Groups, which are defined by their locations on a diagram of solid-fluid density difference and particle size. Fluidized beds can be designed based upon the Geldart grouping of the particles to be fluidized. The smallest dense particles are classified in Geldart Group C, which represents particle sizes of generally less than 20 micrometers (µm). Geldart Group A refers to dense particles with particle sizes generally ranging from 20 µm to 100 µm. Geldart Group B particle size generally ranges from 100 µm to 500 µm. Geldart Group D has the highest particle sizes. The dense particles in Group D generally have particle sizes above 500 µm. However, these particle sizes for each Group will vary depending on the densities of the particles and the gas used to fluidize them.

Copper silicide particles useful in processes for preparing halosilanes have Geldart group classifications of A, B, and/or C, alternatively A and/or B. WO 2014/149224 discloses a method for preparing a halosilane using copper silicides as catalysts. In US 4554370 fumed silica in a mixture of powdered silicon and cuprous chloride is used to reduce agglomeration in a fluid bed reactor. Therefore, there is an industry need to fluidize such particles to use them in fluidized bed reactor processes for making halosilanes.

### BRIEF SUMMARY OF THE INVENTION

A method for maintaining a uniformly fluidized bed in a fluidized bed apparatus comprises:
(A) heating, at a temperature of at least 400°C, a mixture of particles comprising greater than 80% to less than 100% copper silicide particles and greater than 0 to 20% fluidization additive particles in the fluidized bed apparatus, and
(B) feeding a fluid into the fluidized bed apparatus at a velocity sufficient to maintain uniform fluidization. The fluid may be a gas, vapor, or liquid; or a mixture of two or more of the gas, the vapor, and the liquid.

### DETAILED DESCRIPTION OF THE INVENTION

Without wishing to be bound by theory, it is thought that to classify fluidization behavior of a fluidized bed, pressure drop across the height of the bed is measured and compared with superficial fluid velocity. Particles can be loaded into a fluidized bed apparatus, and fluid flowed through the bed of particles therein. At low fluid velocities, the bed is in a fixed state. Upon increasing velocity to a minimum fluidization velocity for the particular bed, the bed leaves the fixed state and enters a fluidized state. When the bed is in the fixed state, pressure drop increases nearly linearly across the height of the bed as superficial fluid velocity increases; up until the minimum fluidization velocity is reached. When minimum fluid velocity is reached, the entire weight of the bed is supported by the fluid and the bed is in the fluidized state. The pressure drop across the fluidized bed will generally remain constant at minimum fluid velocity and higher fluid velocities, when the fluidized bed is in a bubbling bed state. If the pressure drop continues to increase as fluid velocity increases, this indicates a slugging condition, in which particles move up in the bed in a nonuniform plug. If pressure drop in a fluidized bed exhibits a downward trend as velocity increases, then this indicates a spouting bed condition. It is desirable to maintain a bubbling bed fluidized state, *i.e.,* when the bed is fluidized during the practice of the method described herein, it is desirable for the bed to be in the bubbling bed state. Fluidization conditions with slugging, spouting, or channeling (which results in a pressure drop substantially less than the weight of the bed of particles divided by the cross sectional area of the fluidized bed apparatus because a path through the bed allows the fluid to pass through too easily, thereby causing defluidization) are nonuniform, undesirable conditions to be avoided. The fluidization is considered uniform when pressure drop is equal to the weight of the bed of particles divided by bed cross sectional area (*e.g*., cross sectional area of the fluidized bed apparatus). To maintain, the uniform fluidization must stay in effect during the course of a process, while avoiding a tendency to form channels and/or stop supporting the bed of particles, *e.g.,* uniform fluidization must be achieved during the course of a reaction performed in a fluidized bed reactor.

The inventors surprisingly found that copper silicide particles exhibit cohesive behavior at high temperatures, and this cohesive behavior contributes to nonuniform fluidized bed conditions. As shown by the examples provided, *infra,* attempts to fluidize copper silicide particles with nitrogen gas in a fluidized bed apparatus were successful at low temperatures (*i.e.,* room temperature of 23°C to less than 400 °C); a uniform fluidized bed could be maintained. However, under the same conditions, except that temperature was increased to 400 °C to below 500 °C, attempts to fluidize copper silicide particles in Geldart Groups A, B, and C resulted in poor bed uniformity; and upon increasing temperature to 500 °C and higher temperatures, the copper silicide particles exhibited cohesive behavior and agglomerated, thus forming a fixed bed agglomerate in the apparatus that would not fluidize, with channels through the agglomerate that permitted the fluid to pass through the bed with negligible pressure drop. The inventors surprisingly found that this behavior was reversible by lowering the temperature. And, the inventors further surprisingly found that adding a small amount of fluidization additive particles allowed the resulting mixture of copper silicide particles and fluidization additive particles to form a uniformly fluidized bed at temperatures of 400°C and higher under the same process conditions that formed the agglomerate without the fluidization additive particles.

Therefore, a method for maintaining a uniformly fluidized bed comprises:
(A) heating, at a temperature of at least 400°C, a mixture of particles comprising greater than 80% to less than 100% copper silicide particles and greater than 0 to 20% fluidization additive particles in the fluidized bed apparatus, and
(B) feeding a fluid into the fluidized bed apparatus at a velocity sufficient to maintain uniform fluidization.

"Copper silicide" means a material including both silicon and copper that are intermixed at an atomic level, and the arrangement of the atoms can be described using crystallographic principles and models. Example phases of copper silicides are found in the phase diagram (Okamoto H., J. Phase. Equilib., Vol. 23, 2002, p 281-282) and include, but are not limited to: Cu_{0.88}Si_{0.12}, Cu_{0.85}Si_{0.15}, Cu_{0.83}Si_{0.17}, Cu_{4.15}Si_{0.85}, Cu₁₅Si₄, and Cu_{3.17}Si. Exemplary copper silicides include, but are not limited to, Cu₇Si, Cu₅Si, Cu₄Si, and Cu₃Si. Other exemplary copper silicides include, but are not limited to, κ-Cu₇Si, γ-Cu₅Si, δ-Cu_{4.88}Si, ε-Cu₄Si, and η-Cu₃Si. Other exemplary copper silicides include, but are not limited to η-Cu₃Si, η'-Cu₃Si, η"-Cu₃Si, η-Cu_{3.17}Si, η'-Cu_{3.17}Si, and η"-Cu_{3.17}Si.

The copper silicide used in step (A) may be charged into the reactor in step (A) as a pre-formed copper silicide. In one embodiment, the copper silicide may be charged into the fluidized bed apparatus before beginning the method described herein. Alternatively, the copper silicide used in the method described herein may be formed *in situ.* For example, when the fluidized bed apparatus used in the method described herein is a fluidized bed reactor in which a chemical reaction occurs, the copper silicide may be formed *in situ* from reactants fed into the fluidized bed reactor.

The copper silicide may be a binary copper silicide, for example, one or more of Cu₇Si, Cu₅Si, Cu₄Si, and Cu₃Si. Alternatively, the copper silicide may be one or more of κ-Cu₇Si, γ-Cu₅Si, ε-Cu₄Si, and η-Cu₃Si. Alternatively, the copper silicide may be Cu₃Si, Cu₅Si, or a combination thereof. Alternatively, the copper silicide may be Cu₃Si. Alternatively, the copper silicide may be Cu₅Si. Copper silicides are commercially available. The copper silicide may be at least 5 atomic weight% silicon, alternatively 5 atomic weight% to 12.23% silicon, with the balance being copper.

Alternatively, the copper silicide may be a ternary or higher copper silicide, comprising silicon, copper, and at least one other metal selected from the group consisting of chromium (Cr), cobalt (Co), iron (Fe), iridium (Ir), nickel (Ni), palladium (Pd), platinum (Pt), rhenium (Re), ruthenium (Ru), and combinations of two or more thereof. This copper silicide may have an empirical formula Cu_{b}Si_{c}Cr_{d}CoₑFe_{f}Ir_{g}NiₕPdᵢPtjReₖRuₘ, where subscripts b, c, d, e, f, g, h, I, j, k, and m represent the molar amounts of each element present, and b > 0, c > 0, d ≥ 0, e ≥ 0, f ≥ 0, g ≥ 0, h ≥ 0, i ≥ 0, j ≥ 0, k ≥ 0, and m ≥ 0; with the provisos that at least one of d, e, f, g, h, l, j, k and m is not 0. In this copper silicide, b > c. Alternatively, 2.5 ≤ b ≤ 8, c = 1, and one of d, e, f, g, h, l, j, k and m is greater than 0. Alternatively, the other metal may be selected from the group consisting of Ni, Pd, and Pt. Alternatively, the other metal may be selected from the group consisting of Fe and Ru. Alternatively, the other metal may be Cr. Alternatively, the other metal may be selected from the group consisting of Co and Ir. Alternatively, the other metal may be Re.

Alternatively, the copper silicide may have formula (M)ₙ(CuₚSi)ₒ, where M is the other metal selected from of chromium (Cr), cobalt (Co), iron (Fe), iridium (Ir), nickel (Ni), palladium (Pd), platinum (Pt), rhenium (Re), and ruthenium (Ru). Subscript n represents the molar amount of other metal, and 0 < n ≤ 1. Subscript p represents the molar amount of copper relative to silicon, and 2.5 ≤ p ≤ 8. Alternatively, 3 ≤ p ≤ 5. Subscript o represents the molar amount of copper and silicon collectively, relative to the amount of the other metal, and o has a value sufficient that a quantity (n + o) = 100.

Alternatively, the copper silicide in this embodiment may have formula (M_{q}:CU_{(1-q)})_{W}Si, where M is the other metal as described above, subscript 0 < w ≤ 0.01; alternatively 0.001 ≤ q ≤ 0.01 and 2.5 ≤ w ≤ 8. Alternatively, M is selected from the group consisting of Ni, Pd, and Pt. Alternatively, M is selected from the group consisting of Ni and Pd. Alternatively, M is Ni. Alternatively, M is Pt. Exemplary copper silicides of this formula include (Ni_{0.01}Cu_{0.99})₅Si, (Pd_{0.01}Cu_{0.99})₅Si, (Pt_{0.01}Cu_{0.99})₅Si, ₍Ni_{0.01}Cu_{0.99})₄Si, (Pd_{0.01}Cu_{0.99})₄Si, (Pt_{0.01}Cu_{0.99})₄Si, (Ni_{0.01}Cu_{0.99})₃Si, (Pd_{0.01}Cu₀.₉₉)₃Si, (Pt_{0.01}Cu_{0.99})₃Si, (Cr_{0.01}Cu_{0.99})₄Si, (Co_{0.01}Cu_{0.99})₄Si, and (Fe_{0.01}Cu_{0.99})₄Si. These copper silicides are commercially available. Alternatively, they may be prepared by conventional methods, such as from the melt of the individual elements at predetermined stoichiometry using a heating apparatus such as electric arc melter. Alternatively, the ternary intermetallic compounds may be prepared by a process comprising vacuum impregnating two metal halides on silicon particles thereby producing a mixture, and mechanochemically processing the mixture under an inert atmosphere, thereby producing a reaction product comprising the ternary copper silicides. The copper silicides described above may be prepared in this manner.

The copper silicide particles may be classified in Geldart Group A, B, and/or C. Alternatively, the copper silicide particles may be classified in Geldart Group A and/or Geldart Group B. Alternatively, the copper silicide particles may be classified in Geldart Group B. Alternatively, the copper silicide particles may be classified in Geldart Group A. The particle size of the copper silicide particles depends on various factors including selection of fluid used to fluidize the particles and the fluidized bed apparatus configuration. However, the particle size of the copper silicide particles may be up to 500 µm, alternatively 20 µm to 300 µm, alternatively up to 45 µm, alternatively <45 µm to 300 µm, alternatively 45 µm to 300 µm, and alternatively 45 µm to 150 µm. Light scattering, microscopy, or laser diffraction can be used to measure particle sizes.

The fluidization additive particles charged into the reactor in step (A) are particles of any substance that will allow the mixture comprising the fluidization additive particles and the copper silicide particles to form a uniformly fluidized bed at temperatures of 400 °C or more under the same process conditions that would not form a uniformly fluidized bed without the fluidization additive particles. The fluidization additive particles have a melting point greater than 400 °C, alternatively greater than 500 °C, and alternatively greater than 850°C. The fluidization additive particles may be particles of one of carbon, metallic silicon, silicon carbide, or silica. Alternatively, the fluidization additive particles may be silicon carbide particles or silica particles. Alternatively, the fluidization additive particles may be silica particles. Alternatively, the fluidization additive particles may be silicon carbide particles. The fluidization additive particles are distinct from the copper silicide particles, *e.g.,* the fluidization additive may be in the form of discrete particles; and the mixture of particles may be a physical mixture of discrete particles of copper silicide and discrete particles of fluidization additive. The physical mixture may be prepared by any convenient means, such as mixing metallic copper particles with particles of the fluidization additive particles under ambient conditions of temperature and pressure (*e.g*., without high temperature and/or pressure treating). The fluidization additive particles are compositionally distinct from the copper silicide particles. The fluidization additive particles are typically free of copper, *i.e.,* the copper silicide particles contain a nondetectable amount copper as measured by ICP-MS or ICP-AES or the copper silicide particles contain an amount of copper insufficient to render the fluidization nonuniform in the method described herein. When the method will be used in a process for preparing a halosilane, the fluidization additive particles may be selected so as not to interfere with the reaction that occurs to make the halosilane. In this embodiment, the fluidization additive particles may be silicon particles, silica particles, or silicon carbide particles; alternatively, the fluidization additive particles may be silica particles or silicon carbide particles; alternatively, the fluidization additive particles may be silica. Alternatively, the fluidization additive particles may be silicon carbide.

The particle size of the fluidization additive particles may be less than the particle size selected for the copper silicide particles. For example, the fluidization additive particles may have particle size ranging from 1 micrometer to 100 µm, alternatively 1 to 3 µm, alternatively 20 µm to 40 µm, alternatively 60 to 90 µm. Without wishing to be bound by theory, the smaller particle size of the fluidization additive particles may allow them to coat the surface of the copper silicide particles.

The amount of fluidization additive particles is sufficient to allow the bed to uniformly fluidize at temperatures of 400°C or more, alternatively 500°C or more, alternatively 23 °C to 1400 °C, alternatively 200 °C to 850 °C, alternatively 200 °C to 850 °C, alternatively 400 °C to 750 °C, and alternatively 500 °C to 750 °C. The amount of fluidization additive will depend on various factors including the type of additive selected, the type of fluid selected, the particle size of the particles in the mixture, and the configuration of the fluidized bed apparatus, however, the amount of fluidization additive may range from greater than 0% to 20 %, alternatively 0.5% to 25%, alternatively 0.5% to 10%, alternatively 2% to 10%, alternatively 2% to 5%, based on combined weights of all particles charged into the reactor in step (A). Alternatively, the mixture may consist of the copper silicide particles and the fluidization additive particles.

Without wishing to be bound by theory, it is thought that the fluidization additive particles may be able to collide with and break apart the cohesive bonds between copper silicide particles that would otherwise contribute to their cohesive behavior resulting in agglomeration of copper silicide particles at high temperatures in absence of the fluidization additive particles. Alternatively, when the fluidization additive particles have a smaller size than the copper silicide particles used, it is thought that the smaller particles may coat the surface of the copper silicide particles, thereby preventing agglomeration of copper silicide particles by preventing the diffusion that would cause the copper silicide particles to exhibit cohesive behavior.

### EXAMPLES

These examples are intended to illustrate some embodiments of the invention and should not be interpreted as limiting the scope of the invention set forth in the claims. In the tables below, 'nd' means not done or not determined. The particles of copper silicide of formula Cu₅Si used in the examples below were purchased from ACI Alloys. The source copper and silicon were 99.99% pure. The particles had 5 mm to 10 mm particle sizes and were ground in jaw crusher and sieved. The silica was purchased from Clariant. The silicon carbide was β-phase with 99.8% purity and was purchased from Alfa Aesar. The silicon carbide was passed through a 177 µm screen to create two different particle size distributions.

The fluidized bed apparatus used in these examples included a 2.54 cm outer quartz tube, heated in a Lindberg Blue furnace situated in the vertical position. A glass inner tube had a 0.9525 cm inner diameter, in which fluidization was performed. Nitrogen was used to fluidize the particles in this apparatus. Nitrogen gas was fed into the outer tube, flowing downward to be preheated. The nitrogen was then passed through a glass frit and up through the inner tube. This inner tube held the particles to be fluidized. The inner tube exited into an expanded head to collect any particles entrained when the nitrogen exited to the atmosphere.

Instrumentation for this apparatus included a rotameter to control the nitrogen flow, a thermocouple placed inside a thermal well in the inner tube, and a differential pressure transmitter. The differential pressure was measured between the inlet gas pressure and the pressure of the nitrogen leaving the inner tube to the atmosphere. The system was calibrated at all temperatures with an empty bed to allow for the pressure drop of the system, such as that due to the frit, to be separated from that of the bed.

In each example, the bed temperature was first set to 50 °C. The complete fluidization regime was then measured. The nitrogen velocity was started at zero and was slowly increased. The differential pressure was continuously monitored and increased as the velocity through the bed was increased. Uniform fluidization was determined when the pressure drop stayed constant as the velocity of nitrogen increased. Visual observation was also used to confirm uniform fluidization.

Once uniform fluidization was established, the nitrogen velocity was slowly decreased to stop fluidization, with the bed returning to a fixed state. The method was then repeated at increasing temperatures; 200 °C, 400 °C, 500 °C, 600 °C, 700 °C, and 750 °C were tested. Fluidization behavior was quantified by pressure drop overshoot while increasing the nitrogen velocity, relative to the fluidization pressure drop. Additionally, the linearity of the pressure drop versus the nitrogen velocity upon returning to the fixed state was calculated. Pressure drop overshoot means the difference between the threshold for fluidization and fluidization pressure drop and is a function of using a laboratory sized bed with a high aspect ratio. The fluidization pressure drop must be exceeded to get fluidization to begin. However, once fluidization begins, the fluidization pressure drop is lower (i.e., pressure drop while uniform fluidization is maintained).

In example comparative 1, the fluidized bed apparatus was loaded with pure Cu₅Si (20 g) with a particle size range of 45 -106 µm. The temperature was set to 50 °C. The nitrogen velocity was slowly increased, and uniform fluidization was achieved when the pressure drop equaled the theoretical fluidization pressure drop (10.7 in. H₂O). The nitrogen velocity was then decreased and the pressure drop observed as the bed was brought back to the fixed state. Upon defluidizing, the bed became fixed and the pressure drop slowly decreased to zero. At 200 °C, a similar result ensued. At 400°C, the pressure drop through the fixed bed reached as high as 15.6 in. H₂O prior to fluidizing at a pressure drop of 10.7 in. H₂O; thereby indicating nonuniform fluidization. At the point where the nitrogen velocity was not sufficient to support fluidization, the bed became agglomerated with channels allowing for the pressure drop to be nearly zero. At 500 °C, the pressure drop through the fixed bed reached as high as 26.2 in. H₂O prior to fluidizing for an instant, however, uniform fluidization was not achieved at 500°C. The bed immediately collapsed into its agglomerated state, forming channels through which the nitrogen could pass undisturbed. At temperatures greater than 500 °C, fluidization could not be achieved for any recognizable amount of time before the particles agglomerated.

In example 2, the fluidized bed apparatus was loaded with Cu₅Si particles with a 45-106 micrometer particle size and with silicon particles with a particle size of 63-88 µm. The amount of Cu₅Si particles was 95%, and the amount of silicon particles was 5%, of the particles in the apparatus. The combined amounts of particles totaled 20 grams. Starting at a temperature of 50 °C, the nitrogen velocity was slowly increased until the bed was fluidized. The nitrogen velocity was then decreased and the pressure drop observed as the bed was brought back to the fixed state. This was repeated up to a temperature of 600 °C. The mixture was able to successfully fluidize at temperatures through 500°C. At 500°C, the max pressure drop observed was equivalent to that of fluidization (11.3 in. H₂O). Upon decreasing the nitrogen velocity to return to the fixed bed state, the pressure drop decreased linearly in relation to the nitrogen velocity (R²=0.980), showing no signs of agglomeration and channeling. However, at 600 °C. the bed agglomerated as soon as the nitrogen velocity was enough to allow the particles to arrange into channels to allow the nitrogen to pass freely.

In example 3, the fluidized bed apparatus was loaded with Cu₅Si particles with a particle size of 45-106 µm and silica with a particle size of 20-40 µm. The amount of Cu₅Si particles was 95%, and the amount of silica particles was 5%, of the particles in the apparatus. The combined amounts of particles totaled 20 grams. Starting at a temperature of 50 °C, the nitrogen velocity was slowly increased until the bed was fluidized. The nitrogen velocity was then decreased and the pressure drop observed as the bed was brought back to the fixed state. This was repeated up to the maximum testing temperature of 750 °C. The particles were able to uniformly fluidize at all the temperatures tested. At 750 °C, the maximum pressure drop observed was 9.0 in. H₂O, which was greater than the pressure drop of 8.3 in. H₂O observed at fluidization. Upon decreasing the nitrogen velocity to return to the fixed bed state, the pressure drop decreased linearly in relation to the nitrogen velocity (R²=0.967), showing no signs of agglomeration and channeling.

In example 4, the fluidized bed apparatus was loaded with Cu₅Si particles with a particle size of 45-106 µm and silicon carbide particles with a particle size of 1-3 µm. The amount of Cu₅Si particles was 95%, and the amount of silicon carbide particles was 5%, of the particles in the apparatus. The combined amounts of particles totaled 20 grams. The same procedure was used, starting at a temperature of 50 °C. The nitrogen velocity was slowly increased until the bed was fluidized. The velocity was then decreased and the reactor brought back to the fixed bed state. This was repeated up to the maximum testing temperature of 750 °C. The mixture was able to successfully fluidize at all the temperatures tested. At 750 °C, the maximum pressure drop observed was equal to that of the pressure drop at fluidization (8.1 in. H₂O). Upon decreasing the nitrogen velocity to return to the fixed bed state, the pressure drop decreased linearly in relation to the nitrogen velocity (R² = 0.985), showing no signs of agglomeration and channeling.

In example 5, the fluidized bed apparatus was loaded with Cu₅Si particles with a particle size of 45-106 µm and silicon carbide particles with a particle size of 1-3 µm. The amount of Cu₅Si particles was 98%, and the amount of silicon carbide particles was 2%, of the particles in the apparatus. The same procedure was used, starting at a temperature of 50 °C. The nitrogen velocity was slowly increased until the bed was fluidized. The velocity was then decreased and the reactor brought back to the fixed bed state. This was repeated up to the maximum testing temperature of 750 °C. The particles were able to uniformly fluidize at all the temperatures tested. At 750 °C, the maximum pressure drop observed was equal to that of the pressure drop at fluidization (9.3 in. H₂O). Upon decreasing the nitrogen velocity to return to the fixed bed state, the pressure drop decreased linearly in relation to the nitrogen velocity (R² = 0.976), showing no signs of agglomeration and channeling.

In comparative example 6, the apparatus was loaded with a copper silicide of formula Cu_{0.816}Si_{0.167}Pd_{0.008}Ni_{0.008} purchased from ACI Alloys, Inc. of San Jose, California, U.S.A. This copper silicide had particle size 45-106 µm. The same procedure as in the previous examples was followed. While testing at 400 °C, as the nitrogen velocity was decreased below the minimum fluidization velocity, the pressure drop through the bed became nearly zero. This was attributed to agglomeration and channeling in the bed. The fluidization could be reinitiated by increasing the nitrogen velocity to a point much higher than that required for fluidization, or by providing an external source of energy (such as vibration). This same phenomenon was observed at 500°C and 600 °C, with the agglomeration and channeling becoming more severe. At 700 °C, fluidization would only occur while continuously providing bed vibrations, and at 750°C, the bed would not fluidize sufficiently to record pressure drop values. Upon cooling from 750°C to 400 °C, fluidization could again be achieved. This showed that copper silicides that contain additional metals exhibited the same agglomeration problem as binary silicides.

In example 7, the apparatus was again loaded with the copper silicide of formula Cu_{0.816}Si_{0.167}Pd_{0.008}Ni_{0.008} as in comparative example 6. A fluidization additive, silicon carbide of particle size 1-3 µm, was added so that the weight percent of the silicon carbide particles constituted 2% of the total weight of silicon carbide and copper silicide particles to form a mixture of particles in the apparatus. The same testing procedure as in the previous examples was followed. The mixture of particles was able to sustain uniform fluidization at all temperatures tested without involving any vibration or other outside manipulation. At 750 °C, the maximum pressure drop measured was equivalent to that of the pressure drop at fluidization (13.1 in. H₂O). Upon decreasing the nitrogen velocity to return to the fixed bed state, the pressure drop decreased linearly in relation to the nitrogen velocity (R² = 0.977), showing no signs of agglomeration or channeling. This example showed that the fluidization additive was effective with copper silicides that contain additional metals.

**Table 1 shows the maximum temperature tested at which fluidization was lasting and did not lead to agglomeration and channeling of the bed.**

| **Fluidization Additive** | **Tₘₐₓ for uniform fluidization (°C)** |
|---|---|
| None (comparative) | 400 |
| 5% Si | 500 |
| 5% silica | 750 |
| 2% SiC | 750 |
| 5% SiC | 750 |

| | |
|---|---|
| Note: For 5% silica and both test results for silicon carbide, it is thought that Tmax will be higher, however, temperatures higher than 750 °C were not tested in this set of examples. | |

**Table 2 summarizes the ratio of the pressure drop overshoot from the fluidization pressure drop as well as the linearity of the pressure drop versus nitrogen velocity while decreasing the velocity. The table shows the data for the three pure Cu₅Si mixtures that uniformly fluidized, and did not agglomerate and channel, at all temperatures measured.**

| Temp (°C) | 5% Silica | | 2% SiC | | 5% SiC | |
|---|---|---|---|---|---|---|
| | DPₘₐₓ/ DP_{fluidization} | R² defluidization | DPₘₐₓ/ DP_{fluidization} | R² defluidization | DPₘₐₓ/ DP_{fluidization} | R² defluidization |
| 400 | 1.00 | .965 | 1.00 | .975 | 1.00 | .981 |
| 500 | 1.20 | .961 | 1.00 | .985 | 1.00 | .985 |
| 600 | 1.11 | .948 | 1.00 | .977 | 1.00 | .976 |
| 700 | 1.01 | .960 | 1.00 | .979 | 1.00 | .981 |
| 750 | 1.08 | .967 | 1.00 | .976 | 1.00 | .985 |

These examples show that silicon, silica and silicon carbide each aid fluidization of copper silicide under the same conditions. However, silica and silicon carbide produced better results than silicon because the temperature at which uniform fluidization without agglomeration or channeling could be maintained was higher than that achieved with silicon.

All ratios, percentages, and other amounts are by weight, unless otherwise indicated by the context of the specification. The articles 'a', 'an', and 'the' each refer to one or more, unless otherwise indicated by the context of the specification. Abbreviations used herein are defined in Table A, below.

**Table A - Abbreviations**

| Abbrev. | Word |
|---|---|
| % | Percent |
| °C | degrees Celsius |
| GC | gas chromatograph and/or gas chromatography |
| ICP-AES | inductively coupled plasma atomic emission spectroscopy |
| ICP-MS | inductively coupled plasma mass spectrometry |
| mg | Milligram |
| mL | Milliliters |
| mm | millimeters |
| s | Seconds |
| sccm | standard cubic centimeters per minute |
| XRF | X-ray fluorescence spectroscopy |

## Claims

1. A method maintaining a uniformly fluidized bed in a fluidized bed apparatus comprises:
(A) heating, at a temperature of at least 400°C, a mixture of particles comprising greater than 80 weight% to less than 100% copper silicide particles and greater than 0 to 20 weight% fluidization additive particles in the fluidized bed apparatus, and
(B) feeding a fluid into the fluidized bed apparatus at a velocity sufficient to maintain uniform fluidization.

2. The method of claim 1, where the copper silicide particles have a particle size of 10 µm to 150 µm.

3. The method of claim 1, where the additive particles are present in an amount of greater than 0 weight% to 10 weight%, based on total weight of the mixture.

4. The method of claim 1, where the copper silicide particles are present in an amount of 95 weight% to 98 weight% of the mixture, and the fluidization additive particles are present in an amount of 2 weight% to 5 weight % of the mixture.

5. The method of claim 1, where the copper silicide is selected from the group consisting of (i) Cu₇Si, (ii) Cu₅Si, (iii) Cu₄Si, and (iv) Cu₃Si, and a mixture of two or more of (i), (ii), (iii), (iv).

6. The method of claim 1, where the copper silicide comprises Cu₅Si.

7. The method of claim 1, where the copper silicide has empirical formula Cu_{b}Si_{c}Cr_{d}CoₑFe_{f}Ir_{g}NiₕPdᵢPtⱼReₖRuₘ, where subscripts b, c, d, e, f, g, h, i, j, k, and m represent the molar amounts of each element present, and b > 0, c > 0, d ≥ 0, e ≥ 0, f ≥ 0, g ≥ 0, h ≥ 0, i ≥ 0, j ≥ 0, k ≥ 0, and m ≥ 0; with the provisos that at least one of d, e, f, g, h, i, j, k and m is not 0.

8. The method of claim 1, where the fluidization additive particles are selected from the group consisting of silicon particles, silica particles and silicon carbide particles.

9. The method of claim 8, where the fluidization additive particles are silica particles.

10. The method of claim 8, where the fluidization additive particles are silicon carbide particles.

11. The method of claim 1, where the temperature in step (B) is at least 500°C.

12. The method of claim 11, where the temperature in step (B) is 500°C to 750°C.

13. The method of claim 1, where the temperature in step (B) is 400°C to 750°C.

14. The method of any one of the preceding claims, where the method is used in a process for preparing a halosilane.

## Patentansprüche

1. Ein Verfahren, das eine gleichförmige Wirbelschicht in einer Wirbelschichtvorrichtung aufrechterhält, beinhaltet Folgendes:
(A) Erwärmen auf eine Temperatur von mindestens 400 °C einer Mischung von Teilchen, die mehr als 80 Gewichts-% bis weniger als 100 % Kupfersilicidteilchen und mehr als 0 bis 20 Gewichts-% Fluidisierungsadditivteilchen beinhaltet, in der Wirbelschichtvorrichtung und
(B) Einspeisen eines Fluids in die Wirbelschichtvorrichtung mit einer Geschwindigkeit, die ausreicht, um gleichförmige Fluidisierung aufrechtzuerhalten.

2. Verfahren gemäß Anspruch 1, wobei die Kupfersilicidteilchen eine Teilchengröße von 10 µm bis 150 µm aufweisen.

3. Verfahren gemäß Anspruch 1, wobei die Additivteilchen in einer Menge von mehr als 0 Gewichts-% bis 10 Gewichts-%, bezogen auf das Gesamtgewicht der Mischung, vorliegen.

4. Verfahren gemäß Anspruch 1, wobei die Kupfersilicidteilchen in einer Menge von 95 Gewichts-% bis 98 Gewichts-% der Mischung vorliegen und die Fluidisierungsadditivteilchen in einer Menge von 2 Gewichts-% bis 5 Gewichts-% der Mischung vorliegen.

5. Verfahren gemäß Anspruch 1, wobei das Kupfersilicid aus der Gruppe ausgewählt ist, die aus (i) Cu₇Si, (ii) Cu₅Si, (iii) Cu₄Si und (iv) Cu₃Si und einer Mischung von zwei oder mehr von (i), (ii), (iii), (iv) besteht.

6. Verfahren gemäß Anspruch 1, wobei das Kupfersilicid Cu₅Si beinhaltet.

7. Verfahren gemäß Anspruch 1, wobei das Kupfersilicid die empirische Formel CU_{b}Si_{c}Cr_{d}CoₑFe_{f}Ir_{g}NiₕPdᵢPtⱼReₖRuₘ aufweist, wobei die Indizes b, c, d, e, f, g, h, i, j, k und m die molare Menge jedes vorliegenden Elements darstellen und b > 0, c > 0, d ≥ 0, e ≥ 0, f ≥ 0, g ≥ 0, h ≥ 0, i ≥ 0, j ≥ 0, k ≥ 0 und m ≥ 0; unter der Voraussetzung, dass mindestens eines von d, e, f, g, h, i, j, k und m nicht 0 ist.

8. Verfahren gemäß Anspruch 1, wobei die Fluidisierungsadditivteilchen aus der Gruppe ausgewählt sind, die aus Siliciumteilchen, Siliciumdioxidteilchen und Siliciumcarbidteilchen besteht.

9. Verfahren gemäß Anspruch 8, wobei die Fluidisierungsadditivteilchen Siliciumdioxidteilchen sind.

10. Verfahren gemäß Anspruch 8, wobei die Fluidisierungsadditivteilchen Siliciumcarbidteilchen sind.

11. Verfahren gemäß Anspruch 1, wobei die Temperatur in Schritt (B) mindestens 500 °C beträgt.

12. Verfahren gemäß Anspruch 11, wobei die Temperatur in Schritt (B) 500 °C bis 750 °C beträgt.

13. Verfahren gemäß Anspruch 1, wobei die Temperatur in Schritt (B) 400 °C bis 750 °C beträgt.

14. Verfahren gemäß einem der vorhergehenden Ansprüche, wobei das Verfahren in einem Prozess zum Herstellen eines Halogensilans verwendet wird.

## Revendications

1. Un procédé maintenant un lit fluidisé de façon uniforme dans un appareil à lit fluidisé comprend :
(A) le fait de chauffer, à une température d'au moins 400 °C, un mélange de particules comprenant de plus de 80 % en poids à moins de 100 % de particules de siliciure de cuivre et de plus de 0 à 20 % en poids de particules d'additif de fluidisation dans l'appareil à lit fluidisé, et
(B) le fait d'introduire un fluide dans l'appareil à lit fluidisé à une vitesse suffisante pour maintenir une fluidisation uniforme.

2. Le procédé de la revendication 1, où les particules de siliciure de cuivre ont une taille de particule de 10 µm à 150 µm.

3. Le procédé de la revendication 1, où les particules d'additif sont présentes dans une quantité de plus de 0 % en poids à 10 % en poids, rapporté au poids total du mélange.

4. Le procédé de la revendication 1, où les particules de siliciure de cuivre sont présentes dans une quantité de 95 % en poids à 98 % en poids du mélange, et les particules d'additif de fluidisation sont présentes dans une quantité de 2 % en poids à 5 % en poids du mélange.

5. Le procédé de la revendication 1, où le siliciure de cuivre est sélectionné dans le groupe constitué (i) du Cu₇Si, (ii) du Cu₅Si, (iii) du Cu₄Si, et (iv) du Cu₃Si, et d'un mélange de deux siliciures de cuivre ou plus parmi (i), (ii), (iii), (iv).

6. Le procédé de la revendication 1, où le siliciure de cuivre comprend le Cu₅Si.

7. Le procédé de la revendication 1, où le siliciure de cuivre a une formule empirique Cu_{b}Si_{c}Cr_{d}CoₑFe_{f}Ir_{g}NiₕPdᵢPtⱼReₖRuₘ, où les indices b, c, d, e, f, g, h, i, j, k, et m représentent les quantités molaires de chaque élément présent, et b > 0, c > 0, d ≥ 0, e ≥ 0, f ≥ 0, g ≥ 0, h ≥ 0, i ≥ 0, j ≥ 0, k ≥ 0, et m ≥ 0 ; à condition qu'au moins un indice parmi d, e, f, g, h, i, j, k et m ne soit pas 0.

8. Le procédé de la revendication 1, où les particules d'additif de fluidisation sont sélectionnées dans le groupe constitué de particules de silicium, de particules de silice et de particules de carbure de silicium.

9. Le procédé de la revendication 8, où les particules d'additif de fluidisation sont des particules de silice.

10. Le procédé de la revendication 8, où les particules d'additif de fluidisation sont des particules de carbure de silicium.

11. Le procédé de la revendication 1, où la température à l'étape (B) est d'au moins 500 °C.

12. Le procédé de la revendication 11, où la température à l'étape (B) va de 500 °C à 750 °C.

13. Le procédé de la revendication 1, où la température à l'étape (B) va de 400 °C à 750 °C.

14. Le procédé de n'importe laquelle des revendications précédentes, le procédé étant utilisé dans un processus pour préparer un halogénosilane.
